# FASCICULE DE BREVET EUROPEEN

(11) **EP 3 050 285 B1**
(45) Date de publication et mention de la délivrance du brevet: **26.10.2022**
(21) Numéro de dépôt: 14796193.2
(22) Date de dépôt: 25.09.2014
(51) Int. Cl.: H04L 67/06

(54) **PROCÉDÉ ET DISPOSITIF DE COMMUNICATION ENTRE AU MOINS UN PREMIER TERMINAL ET UN DEUXIÈME TERMINAL**
VERFAHREN UND VORRICHTUNG ZUR KOMMUNIKATION MIT MINDESTENS EINEM ERSTEN ENDGERÄT UND EINEM ZWEITEN ENDGERÄT
METHOD AND DEVICE FOR COMMUNICATING BETWEEN AT LEAST A FIRST TERMINAL AND A SECOND TERMINAL

(30) Priorité: 27.09.2013 FR 1359360
(43) Date de publication de la demande: 03.08.2016
(73) Titulaire: Orange, 92130 Issy-les-Moulineaux (FR)
(72) Inventeur: BEAUFILS, Eric, F-22450 Langoat (FR); LECARPENTIER, Hugues Nicolas, F-22700 Louannec (FR)
(86) Numéro de dépôt international: PCT/FR2014/052402
(87) Numéro de publication internationale: WO 2015/044594

(56) Documents cités:
- WO-A1-02/07396
- US-A1- 2009 197 622
- US-B1- 6 680 940

## Description

L'invention se situe dans le domaine des réseaux de télécommunication. Elle concerne un dispositif et un procédé de communication entre au moins un premier terminal et un deuxième terminal.

Il est aujourd'hui possible pour des utilisateurs d'établir une session de communication de type dessin partagé à partir de leur terminal.

Le document US 20060148527 décrit un système permettant à des utilisateurs appartenant à un groupe d'utilisateurs et disposant chacun d'un terminal de dessiner ensemble, à distance et en temps réel au cours d'une session de communication établie au moyen d'un serveur d'un réseau de communication. Chaque terminal du groupe d'utilisateurs indique sa présence au serveur qui communique alors un signal de présence du terminal aux autres terminaux de groupe. Lorsqu'un terminal envoie un signal indiquant son souhait de participer à une session de communication de dessin, le serveur initie une session de communication de dessin entre les terminaux ayant signalés leur présence au serveur. Au cours de la session de communication, chaque terminal participant à la session de communication génère des données de dessins, suite à une interaction d'un utilisateur du groupe d'utilisateurs sur une interface graphique du terminal. Les données de dessin générées sont envoyées au serveur qui les transmet ensuite aux autres terminaux participant à la session de communication. Au cours de la session de communication, le serveur mémorise les données de dessin envoyées par chaque terminal et transmet les données de dessin aux autres terminaux participants à la session de communication.

Au cours de la session de communication, un terminal rejoignant la session de communication en cours peut obtenir, par l'envoi d'une requête au serveur, l'historique des données de dessin qui ont été envoyées par les autres terminaux au cours de la session de communication.

Dans l'art antérieur, un terminal qui n'était pas présent au cours de la session de communication n'est pas informé qu'une session de communication a eu lieu entre les terminaux du groupe.

De plus, une fois la session de communication terminée, il n'est pas possible pour un terminal de reprendre la session de communication pour interagir sur les données de dessin envoyées au cours de la session de communication précédente.

Le document WO 02/07396 A1 décrit un procédé de messagerie instantanée et un système de communication comprenant un ou plusieurs éléments de réseau. Une connexion d'un élément de réseau à un autre peut être établie par utilisation d'un protocole permettant l'envoi d'un ou plusieurs messages à partir de l'un des éléments de réseau, vers l'autre élément de réseau, en tant que partie d'un ou plusieurs mots de protocole. Le protocole comprend une partie de protocole permettant à un élément de réseau de préciser si le message doit être stocké ou non dans le cas où il ne peut pas être distribué rapidement à l'autre élément de réseau. Cette partie de protocole est de préférence une partie de l'en-tête du protocole. Le protocole peut être un protocole d'initiation de session (Session Initiation Protocol : SIP) et le message peut être contenu dans une requête d'invitation (Invite), envoyée de l'équipement d'émission à l'équipement de réception.

Un des buts de l'invention est d'apporter des améliorations par rapport à l'état de la technique.

Elle propose à cet effet un procédé de communication entre au moins un premier terminal et un deuxième terminal, une première session de communication ayant été préalablement établie à l'initiative du premier terminal, par l'envoi par le premier terminal au deuxième terminal d'un message d'invitation pour participer à ladite première session de communication, et au cours de la première session de communication, des premières données de dessin ayant été générées par au moins le premier terminal, lesdites premières données de dessin étant destinées à être transmises au deuxième terminal. Le procédé de communication comprend, lorsque le deuxième terminal n'est pas disponible pour participer à la première session de communication :
- une étape d'enregistrement desdites premières données de dessin dans un dispositif de communication,
- après la fin de ladite première session de communication, une étape de détection d'un état disponible du deuxième terminal pour participer à une session de communication, déclenchant l'envoi par le dispositif de communication, au deuxième terminal d'un message d'invitation pour participer à une deuxième session de communication,
- une étape de réception par le dispositif de communication d'un message d'acceptation pour participer à ladite deuxième session de communication en provenance du deuxième terminal, permettant l'établissement de la deuxième session de communication entre le deuxième terminal et le dispositif de communication,
- au cours de la deuxième session de communication, une étape d'envoi au deuxième terminal desdites premières données de dessin enregistrées.

L'invention permet ainsi à un terminal invité à participer à une première session de communication et qui n'est pas disponible pour participer à la première session de communication (ici le deuxième terminal), de recevoir au cours d'une nouvelle session de communication, les données de dessin générées au cours de la première session de communication.

Grâce à l'invention, les données de dessin générées au cours de la première session de communication sont transmises à un tel terminal dès que le terminal redevient disponible pour participer à une session de communication de type dessin.

Par exemple, un terminal peut ne pas être disponible pour participer à la première session de communication, parce que le terminal était éteint ou n'était pas connecté à un réseau de communication, ou parce que le réseau de communication ne permettait pas l'établissement de la session de communication ou parce que l'utilisateur du terminal a ignoré l'invitation à participer à la session de communication.

Avantageusement, l'invention permet à des terminaux de pouvoir communiquer selon un mode de communication de type dessin au cours de plusieurs sessions de communication en passant du mode synchrone au mode asynchrone en fonction de la disponibilité des terminaux invités à participer à la session de communication. Par mode synchrone, on entend ici un mode de communication où les données de dessin générées par les terminaux participant à la session de communication sont échangées entre les terminaux participant à la session de communication, en temps réel, au cours de la session de communication. Par mode asynchrone, on entend ici un mode de communication où les données de dessin générées au cours d'une session de communication sont échangées après la fin de la session de communication entre les terminaux invités à participer à la session de communication.

Selon l'invention, le premier terminal établit une session de communication en mode synchrone. Le deuxième terminal n'étant pas disponible pour la première session de communication, les premières données de dessin sont alors générées par le premier terminal selon un mode de communication asynchrone vis-à-vis du deuxième terminal.

Dans une première variante, l'invention est avantageusement mise en œuvre par le premier terminal. Le premier terminal correspond alors au dispositif de communication.

Dans cette première variante, l'établissement d'une deuxième session de communication pour l'envoi des données de dessin permet avantageusement d'assurer une continuité dans la communication par dessin entre les utilisateurs des terminaux invités à la première session de communication, tout en optimisant les ressources du réseau de communication en évitant de maintenir une première session de communication ouverte alors que les terminaux ne communiquent plus.

L'établissement de la deuxième session de communication pour la transmission des premières données de dessin au deuxième terminal est transparent pour le premier terminal. L'utilisateur du premier terminal n'a pas besoin d'interagir sur son terminal pour envoyer au deuxième terminal les premières données de dessin à la fin de la première session de communication.

Dans une deuxième variante, l'invention est mise en oeuvre par un serveur de stockage d'un réseau de communication.

Avantageusement, cette deuxième variante permet une mise en oeuvre plus simple de l'invention lorsque la première session de communication comprend au moins un terminal en plus du premier terminal et générant également des premières données de dessin. En effet, lorsque plus d'un terminal participe à la première session de communication, cette deuxième variante permet que les premières données de dessin générées lors de la première session de communication soient envoyées au deuxième terminal au cours d'une même deuxième session de communication. De plus, cette deuxième variante optimise l'utilisation des ressources des terminaux ayant participé à la première session de communication.

Les différents modes ou caractéristiques de réalisation mentionnés ci-après peuvent être ajoutés indépendamment ou en combinaison les uns avec les autres, aux caractéristiques du procédé de communication défini ci-dessus.

Selon un mode particulier de réalisation de l'invention, le procédé de communication comprend au cours d'une session de communication, une étape de réception en provenance du deuxième terminal de deuxièmes données de dessin générées par le deuxième terminal, en réponse à une réception par le deuxième terminal desdites premières données de dessin envoyées, lesdites deuxièmes données de dessin étant destinées à être ajoutées aux premières données de dessin pour être restituées sur le premier terminal au cours de la session de communication si le premier terminal est disponible pour participer à la session de communication ou au cours d'une session de communication ultérieure sinon.

Ce mode particulier de réalisation de l'invention permet ainsi à un terminal indisponible pour participer à une première session de communication de type dessin de modifier au cours d'une nouvelle session de communication, les données de dessin générées lors de la première session de communication.

Selon ce mode particulier de réalisation de l'invention, le premier terminal a généré les premières données de dessin au cours de la première session de communication selon un mode asynchrone vis-à-vis du deuxième terminal. Au cours d'une nouvelle session de communication, les deuxièmes données de dessin générées par le deuxième terminal sont échangées avec le premier terminal en mode synchrone si le premier terminal est disponible pour participer à la nouvelle session de communication ou en mode asynchrone si le premier terminal n'est pas disponible pour participer à la nouvelle session de communication.

L'invention concerne aussi un procédé de réception de premières données de dessin générées au cours d'une première session de communication établie à l'initiative d'un premier terminal, par l'envoi par le premier terminal au deuxième terminal d'un message d'invitation pour participer à ladite première session de communication. Au cours de la première session de communication, les premières données de dessin sont générées par au moins le premier terminal. Le procédé de réception comprend, lorsque le deuxième terminal n'est pas disponible pour participer à la première session de communication, après la fin de ladite première session de communication :
- une étape de modification de l'état du deuxième terminal en un état disponible pour participer à une session de communication,
- une étape de réception par le deuxième terminal d'un message d'invitation pour participer à une deuxième session de communication en provenance d'un dispositif de communication,
- une étape d'envoi par le deuxième terminal au dispositif de communication d'un message d'acceptation pour participer à ladite deuxième session de communication, permettant l'établissement de ladite deuxième session de communication entre le deuxième terminal et le dispositif de communication,
- au cours de la deuxième session de communication, une étape de réception par le deuxième terminal desdites premières données de dessin, lesdites premières données de dessin ayant été préalablement enregistrées par le dispositif de communication au cours de la première session de communication.

Selon l'invention, le deuxième terminal qui n'a pas participé à la première session de communication peut recevoir ultérieurement les données de dessin échangées au cours de la première session de communication, sans nécessité d'interaction de la part du deuxième terminal. La réception des premières données de dessin permet également d'informer le deuxième terminal qu'une première session de communication a eu lieu au cours de laquelle des premières données de dessin ont été générées. Le deuxième terminal n'a pas besoin d'envoyer de requête au dispositif de communication afin de recevoir les premières données de dessin.

Selon l'invention, l'établissement d'une deuxième session pour l'envoi des premières données de dessin au deuxième terminal offre la possibilité au deuxième terminal de manipuler les premières données de dessin au cours d'une nouvelle session de communication, sans que l'utilisateur du deuxième terminal n'ait besoin d'interagir sur son terminal. Une fois les premières données de dessin reçues, l'utilisateur du deuxième terminal est libre de participer à une nouvelle session de communication ou de fermer l'application de communication ayant servie à l'établissement de la deuxième session de communication sur son terminal.

Les différents modes ou caractéristiques de réalisation mentionnés ci-après peuvent être ajoutés indépendamment ou en combinaison les uns avec les autres, aux caractéristiques du procédé de réception défini ci-dessus.

Selon un mode particulier de réalisation de l'invention, les premières données de dessin sont ajoutées dans le deuxième terminal à un fil de conversation entre au moins l'utilisateur du premier terminal et l'utilisateur du deuxième terminal, ledit fil de conversation comprenant un historique des données de communication échangées entre au moins le premier terminal et le deuxième terminal au cours de précédentes sessions de communication.

Selon ce mode particulier de réalisation de l'invention, les données de dessin générées au cours de la première session de communication sont intégrées aux données de communication échangées entre le premier terminal et le deuxième terminal au cours de précédentes sessions de communication. De telles données de communication correspondent par exemple à des messages SMS, MMS, ou dessins échangés entre l'utilisateur du premier terminal et l'utilisateur du deuxième terminal. Les premières données de dessin générées par le premier terminal sont ainsi regroupées pour l'utilisateur du deuxième terminal dans un même espace d'historique de communications établies avec l'utilisateur du premier terminal. Les données de dessin sont restituées comme des données de communication classiques. L'utilisateur du deuxième terminal peut ainsi aisément interagir sur les données de dessin de la même manière qu'il répondrait à un message texte reçu.

Selon un autre mode particulier de réalisation de l'invention, le procédé de réception de premières données de dessin comprend:
- une étape de génération de deuxièmes données de dessin par le deuxième terminal, en réponse à une restitution sur le deuxième terminal desdites premières données de dessin reçues,
- une étape d'envoi par le deuxième terminal au dispositif de communication, desdites deuxièmes données de dessin, lesdites deuxièmes données de dessin étant destinées à au moins le premier terminal.

Selon ce mode particulier de réalisation de l'invention, le deuxième terminal interagit à partir des premières données de dessin reçues afin de modifier ou compléter le dessin résultant de la première session de communication. Le deuxième terminal peut ainsi apporter la contribution de l'utilisateur du deuxième terminal aux données de dessin générées lors de la première session de communication alors même que le deuxième terminal n'était pas disponible lors de la première session de communication.

Selon un autre mode particulier de réalisation de l'invention, lorsque le dispositif de communication est un serveur de stockage d'un réseau de communication, la génération par le deuxième terminal desdites deuxièmes données de dessin provoque l'envoi au premier terminal d'un message d'invitation à une troisième session de communication.

Lorsque le deuxième terminal interagit sur le dessin issu de la première session de communication initiée par le premier terminal, ce mode particulier de réalisation de l'invention permet d'établir une troisième session de communication avec le premier terminal malgré l'utilisation du serveur de stockage pour l'envoi des premières de données de dessin au deuxième terminal. Le premier terminal et le deuxième terminal peuvent ainsi communiquer sur le dessin en mode synchrone au cours de la troisième session de communication.

L'invention concerne également un dispositif de communication entre au moins un premier terminal et un deuxième terminal, une première session de communication ayant été préalablement établie à l'initiative du premier terminal, par l'envoi par le premier terminal au deuxième terminal d'un message d'invitation pour participer à ladite première session de communication. Au cours de la première session de communication, des premières données de dessin sont générées par au moins le premier terminal, lesdites premières données de dessin étant destinées à être transmises au deuxième terminal. Le dispositif de communication comprend les moyens suivants activés lorsque le deuxième terminal n'est pas disponible pour participer à la première session de communication:
- des moyens d'enregistrement desdites premières données de dessin,
- des moyens de détection d'un état disponible du deuxième terminal pour participer à une session de communication, déclenchant des moyens d'envoi au deuxième terminal d'un message d'invitation pour participer à une deuxième session de communication, lesdits moyens de détection étant activés après la fin de ladite première session de communication,
- des moyens de réception d'un message d'acceptation pour participer à ladite deuxième session de communication en provenance du deuxième terminal, permettant l'établissement de la deuxième session de communication entre le deuxième terminal et ledit dispositif de communication,
- des moyens d'envoi au deuxième terminal desdites premières données de dessin enregistrées, lesdits moyens d'envoi étant activés au cours de la deuxième session de communication.

L'invention concerne aussi un dispositif de réception de premières données de dessin générées au cours d'une première session de communication établie à l'initiative d'un premier terminal, par l'envoi par le premier terminal au deuxième terminal d'un message d'invitation pour participer à ladite première session de communication. Au cours de la première session de communication, les premières données de dessin sont générées par au moins le premier terminal. Le dispositif de réception comprend, les moyens suivants activés lorsque le deuxième terminal n'est pas disponible pour participer à la première session de communication, et après la fin de ladite première session de communication :
- des moyens de modification de l'état du deuxième terminal en un état disponible pour participer à une session de communication,
- des moyens de réception d'un message d'invitation pour participer à une deuxième session de communication en provenance d'un dispositif de communication,
- des moyens d'envoi au dispositif de communication d'un message d'acceptation pour participer à ladite deuxième session de communication, permettant l'établissement de ladite deuxième session de communication entre ledit dispositif de réception et le dispositif de communication,
- des moyens de réception desdites premières données de dessin, lesdites premières données de dessin ayant été préalablement enregistrées par le dispositif de communication au cours de la première session de communication, lesdits moyens de réception étant activés au cours de la deuxième session de communication.

L'invention concerne également un terminal comprenant un dispositif de communication ou un dispositif de réception de premières données de dessin selon l'un quelconque des modes particuliers de réalisation de l'invention cités précédemment.

Dans un mode particulier de réalisation, les différentes étapes du procédé de communication et les étapes du procédé de réception de premières données de dessin sont mises en œuvre par des instructions de programmes d'ordinateurs.

En conséquence, l'invention vise aussi des programmes d'ordinateur sur un support d'informations, ces programmes étant susceptibles d'être mis en œuvre respectivement dans un terminal ou plus généralement dans un ordinateur, ces programmes comportant respectivement des instructions adaptées à la mise en œuvre des différentes étapes du procédé de communication ou du procédé de réception de premières données de dessin qui viennent d'être décrits.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique ou électronique, par exemple une clé USB ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé de communication ou du procédé de réception de premières données de dessin en question.

Les avantages du dispositif de communication, du dispositif de réception de premières données de dessin, du terminal, et du programme d'ordinateur sont identiques à ceux présentés en relation avec le procédé de communication et en relation avec le procédé de réception de premières données de dessin selon l'un quelconque des modes particuliers de réalisation mentionnés ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre un environnement de mise en œuvre de l'invention selon un mode particulier de réalisation de l'invention,
- la figure 2 illustre des étapes du procédé de communication et des étapes du procédé de réception de premières données de dessin selon un mode particulier de réalisation de l'invention,
- la figure 3 illustre des étapes du procédé de communication et des étapes du procédé de réception de premières données de dessin selon un autre mode particulier de réalisation de l'invention,
- la figure 4 illustre un dispositif de communication mettant en œuvre le procédé de communication selon un mode particulier de réalisation de l'invention,
- la figure 5 illustre un dispositif de réception de premières données de dessin mettant en œuvre le procédé de réception de premières données de dessin selon un mode particulier de réalisation de l'invention.

### Description d'un mode particulier de réalisation de l'invention

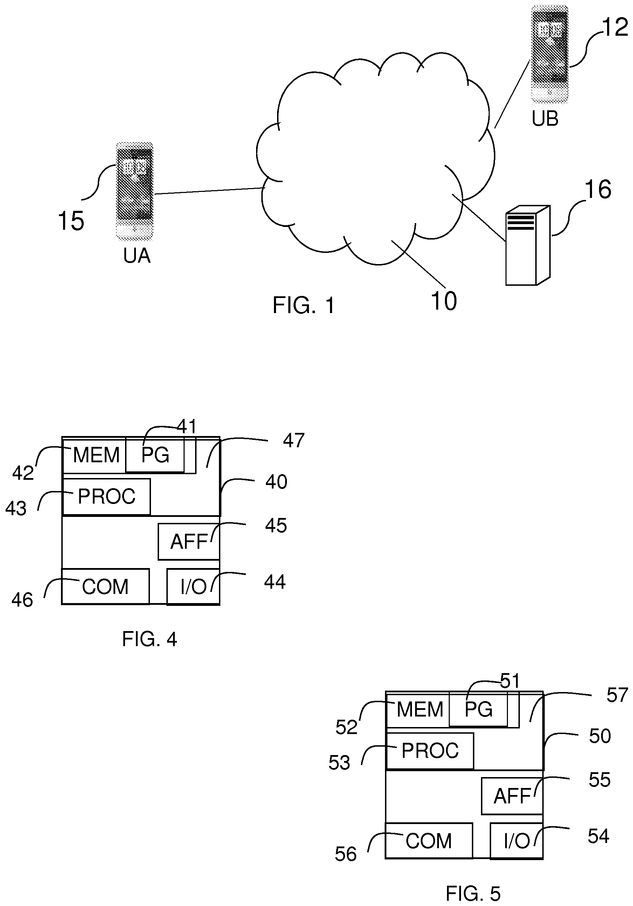

La figure 1 illustre un environnement de mise en œuvre de l'invention selon un mode particulier de réalisation de l'invention.

L'environnement représenté en figure 1 comprend un réseau de communication 10 auquel sont connectés des terminaux 12 et 15 et un serveur de stockage 16.

Par exemple, le réseau de communication 10 est un réseau de communications mobile de type GSM, EDGE, 3G, 3G+, 4G... Il peut être mis en œuvre par une architecture de type RCS.

Le réseau de communication 10 peut correspondre à un groupe de réseaux de communication d'opérateurs différents interconnectés entre eux par l'intermédiaire de serveurs d'interconnexion (non représentés).

Les terminaux 12 et 15 peuvent être tout type de terminaux permettant d'établir des sessions de communication de type téléphonique, visiophonique, messagerie instantanée, tableau blanc, etc.... Les terminaux 12 et 15 correspondent par exemple à un téléphone portable, un smartphone

(téléphone intelligent en anglais), une tablette, une télévision connectée à un réseau de télécommunication, ou un ordinateur personnel.

Dans l'exemple décrit ici, le terminal 15 est un terminal associé à un utilisateur UA et le terminal 12 est un terminal associé à un utilisateur UB. Les terminaux 12 et 15 sont connectés au réseau de communication 10 et peut émettre et recevoir tout type de communications, via le réseau de communication 10.

Notamment, les terminaux 12 et 15 peuvent établir une session de communication de type dessin, via le réseau de communication 10.

Selon l'invention, lorsque le terminal 15 souhaite établir une première session de communication de type dessin avec le terminal 12 mais que le terminal 12 n'est pas disponible pour établir une telle session, selon une première variante, le procédé de communication est mis en œuvre par le réseau de communication 10 en relation avec le serveur de stockage 16. Selon une deuxième variante, le procédé de communication est mis en oeuvre le terminal 15. Le procédé de communication permet à l'utilisateur UA du terminal 15 de dessiner sur son terminal 15 au cours de la première session de communication et après la fin de la première session de communication de transmettre les données de dessin générées par le terminal 15 au cours de la première session de communication, au terminal 12. De telles données sont transmises, au cours d'une deuxième session de communication, au terminal 12 lorsque le terminal 12 est à nouveau dans un état disponible pour établir une session de communication.

L'état disponible du terminal 12 s'entend du point de vue du réseau de communication 10. Du point de vue du réseau de communication 10, le terminal 12 n'est pas disponible pour établir une session de communication par exemple parce qu'il n'est pas enregistré dans le cœur de réseau de communication 10, ou parce que le terminal 12 a notifié au réseau de communication 10 une information de présence indiquant qu'il ne souhaitait pas recevoir de communication ou un certain type de communication, ou parce que le réseau de communication auquel est connecté le terminal 12 ne permet pas d'établir le type de session de communication demandée par le terminal 15. Selon l'invention, le procédé de réception est mis en œuvre par le terminal 12 permettant au terminal 12 d'obtenir les données de dessin générées par le terminal 15 au cours de la première session de communication et éventuellement d'interagir sur de telles données de dessins au cours d'une nouvelle session de communication.

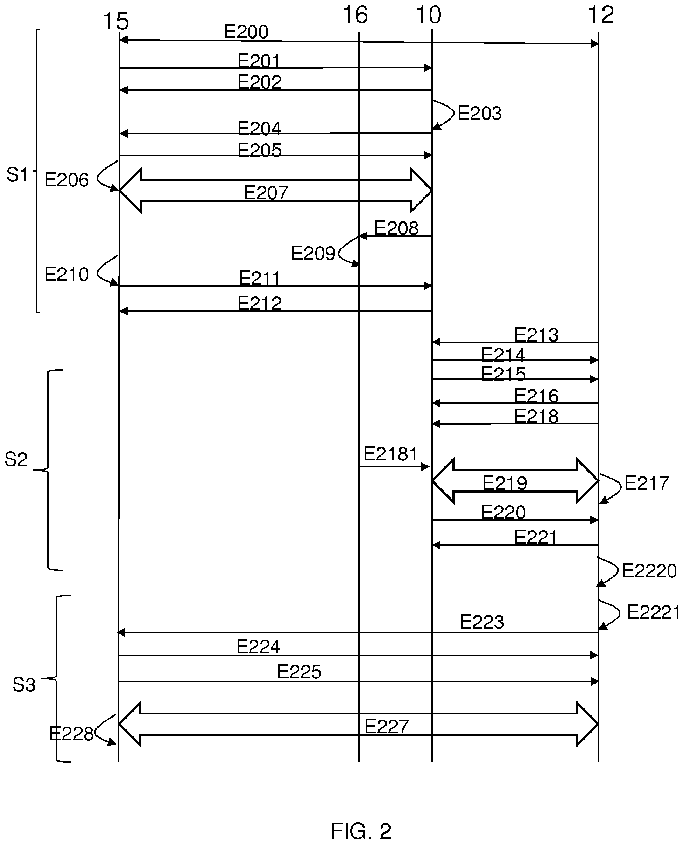

La figure 2 illustre des étapes du procédé de communication et des étapes du procédé de réception de premières données de dessin selon un mode particulier de réalisation de l'invention. Dans ce mode particulier de réalisation de l'invention, le procédé de communication est mis en œuvre par le réseau de communication 10 en relation avec le serveur de stockage 16.

Au cours d'une étape préalable E200, les terminaux 12 et 15 échangent leur capacité respective afin de connaitre les fonctionnalités et services RCS que chaque terminal est capable de supporter. Cet échange de capacités peut être fait par exemple par l'échange entre les terminaux 12 et 15 de messages OPTIONS selon le protocole SIP (pour Session Initiation Protocol en anglais). Notamment, les terminaux 12 et 15 indiquent dans le message OPTIONS qu'ils envoient à l'autre terminal s'ils supportent la capacité de dessin. La capacité de dessin peut être définie dans le message OPTIONS selon le standard RCS ou selon une fonctionnalité propriétaire opérateur. L'étape E200 est régulièrement mise en œuvre par chaque terminal 12 et 15 afin de rafraîchir les informations de capacités des terminaux avec lesquels les terminaux 12 et 15 ont l'habitude de communiquer et qui sont stockées dans les terminaux 12 et 15. Par exemple, l'étape E200 est mise en œuvre à chaque démarrage du terminal 12 ou 15 ou une fois par jour à une heure prédéterminée.

Suite à l'étape E200, le terminal 15 stocke une information en association avec un identifiant du terminal 12 indiquant que le terminal 12 supporte la capacité de dessin synchrone-asynchrone selon le procédé de communication et le procédé de réception tels que définis dans l'invention.

De même, le terminal 12 stocke une information en association avec un identifiant du terminal 15 indiquant que le terminal 15 supporte la capacité de dessin synchrone-asynchrone selon l'invention. Lorsque l'utilisateur UA souhaite établir une session de communication de dessin avec l'utilisateur UB, il active sur son terminal 15 une application de communication de type dessin, initie un nouveau dessin à partir de cette application et sélectionne l'utilisateur UB parmi les contacts enregistrés sur son terminal 15.

Lors d'une étape E201, le terminal 15 envoie alors au terminal 12 un message INVITE selon le protocole SIP, afin d'établir une session de communication S1 entre le terminal 15 et le terminal 12. Le message INVITE contient notamment dans un champ « svg id » un identifiant du dessin qui fait l'objet de la session de communication initiée par le terminal 15. Le message INVITE envoyé par le terminal 15 est un message d'invitation pour participer à la session de communication.

Au cours de l'étape E201, le message INVITE est reçu par le réseau de communication 10. Lors d'une étape E202, le réseau de communication 10 envoie alors au terminal 15 un message 183 Progress selon le protocole SIP indiquant au terminal 15 que le réseau de communication est en train de prolonger son message d'invitation vers le terminal 12.

Lors d'une étape E203, le réseau de communication détecte que le terminal 12 n'est pas disponible pour établir une session de communication. Par exemple, le terminal 12 n'est pas enregistré dans le cœur du réseau de communication 10 et le réseau de communication 10 ne sait pas alors envoyer le message d'invitation au terminal 12.

Selon un autre mode particulier de réalisation de l'invention, le terminal 12 est impliqué dans une autre communication en cours et a renvoyé un message 4xx Busy au réseau de communication 10. Le terminal 12 n'étant pas disponible pour établir une session de communication avec le terminal 15, le réseau de communication 10 accepte à sa place le message d'invitation envoyé par le terminal 15. Pour cela, lors d'une étape E204, le réseau de communication 10 envoie au terminal 15 un message 200 OK selon le protocole SIP.

Lors d'une étape E205, le terminal 15 envoie au réseau de communication 10 un message d'acquittement ACK mettant fin à la phase d'établissement de la session de communication S1. Après l'étape E205, la session de communication S1 est établie entre le terminal 15 et le réseau de communication 10.

Lors d'une étape E206, l'utilisateur UA dessine sur l'interface de son terminal 15. Au cours de l'étape E206, le terminal 15 génère alors des données de dessin correspondant aux mouvements de l'utilisateur UA sur l'interface du terminal 15.

Lors d'une étape E207, les données de dessin générées au cours de l'étape E206 sont envoyées par le terminal 15 au réseau de communication 10 selon le protocole MSRP (pour Message Session Relay Protocol en anglais) défini dans le standard RFC 4975 de l'IETF (pour Internet Engineering Task Force en anglais). Le protocole MSRP est particulièrement avantageux pour la transmission de données de type messages instantanés successifs.

Au cours de l'étape E207, le réseau de communication reçoit les données de dessin envoyées par le terminal 15.

Lors d'une étape E208, le réseau de communication 10 transmet les données de dessin reçues du terminal 15 au serveur de stockage 16. Au cours de l'étape E208, le réseau de communication 10 positionne un indicateur associé au terminal 12 indiquant que des données de dessin enregistrées sur le serveur de stockage 16 sont destinées au terminal 12.

Lors d'une étape E209, le serveur de stockage 16 enregistre les données de dessin reçues au cours de l'étape E208. Les données de dessin sont enregistrées par le serveur de stockage 16 dans un format graphique vectoriel, par exemple selon le format de fichier SVG (pour Scalable Vectoriel Graphics) connu de l'homme du métier. Ce format permet ainsi de faciliter la reprise du dessin représenté par les données de dessin enregistrées en permettant d'ajouter d'autres nouvelles données de dessin aux données de dessin enregistrées. De plus, le format SVG permet d'enregistrer de manière indépendante chaque donnée de dessin. Il est ainsi possible de rejouer l'élaboration du dessin en affichant progressivement sur l'écran d'un terminal chaque donnée de dessin dans l'ordre chronologique selon lequel elles ont été générées.

Au cours de l'étape E209, le serveur de stockage enregistre les données de dessin en association avec des données d'identification de la session de communication S1. De telles données d'identification comprennent notamment l'identifiant du dessin contenu dans le champ « svg id » du message SIP INVITE envoyé par le terminal 15 au cours de l'étape E201, des informations permettant d'identifier les terminaux invités à participer à la session de communication S1, des informations permettant d'identifier les terminaux qui n'étaient pas disponibles pour participer à la session de communication S1 parmi les terminaux invités à participer à la session de communication S1.

Les données d'identification de la session de communication S1 enregistrées permettent ultérieurement de demander l'établissement d'une nouvelle session de communication entre les terminaux initialement invités à participer à la session de communication S1 à partir des données de dessin générées au cours de la session de communication S1.

Lors d'une étape E210, l'utilisateur UA quitte l'application de communication de dessin.

Au cours d'une étape E211, le terminal 15 envoie alors au réseau de communication 10, un message BYE indiquant que le terminal 15 souhaite terminer la session de communication S1 en cours.

Lors d'une étape E212, le réseau de communication 10 envoie alors un message SIP 200 OK pour acquitter la fin de la session de communication S1.

Après l'étape E212, la session de communication S1 est terminée.

Lors d'une étape E213, le terminal 12 modifie son état en un état disponible pour établir une session de communication.

Par exemple, si le terminal 12 n'était pas enregistré dans le cœur du réseau de communication 10, le terminal 12 envoie au réseau de communication 10 un message d'enregistrement au cours de l'étape E213. Le message d'enregistrement est envoyé sous la forme d'un message REGISTER selon le protocole SIP et permet au cœur du réseau de communication 10 d'enregistrer le terminal 12.

La réception par le réseau de communication 10 du message d'enregistrement envoyé par le terminal 12 permet au réseau de communication 10 de détecter au cours de l'étape E213 la modification de l'état du terminal 12 en un état disponible pour établir une session de communication.

Lors d'une étape E214, le réseau de communication 10 envoie un message 200 OK au terminal 12 pour acquitter l'enregistrement du terminal 12 dans le cœur du réseau de communication 10.

La détection par le réseau de communication 10 de la modification de l'état du terminal 12 en un état disponible pour participer à une session de communication provoque l'envoi par le réseau de communication 10 au terminal 12 d'un message d'invitation pour participer à une session de communication S2, au cours d'une étape E215. Le message d'invitation est envoyé sous la forme d'un message SIP INVITE et comporte notamment dans un champ « svg id » l'identifiant du dessin initié au cours de la session de communication S1 et un identifiant du terminal 15 indiquant au terminal 12 que la session de communication S1 a été initiée par le terminal 15.

Lors d'une étape E216, le terminal 12 envoie au réseau de communication 10 un message SIP 180 Ringing indiquant au réseau de communication que le terminal 12 est en train de notifier à l'utilisateur UB la demande d'établissement d'une session de communication envoyée par le réseau de communication 10.

Le terminal 12 étant dans un état disponible pour établir une session de communication, lors d'une étape E218, le terminal 12 accepte automatiquement la demande d'établissement d'une session de communication envoyée par le réseau de communication 10. Pour cela, le terminal 12 envoie au réseau de communication un message d'acceptation pour participer à la session de communication demandée, au cours de l'étape E218, sous la forme d'un message SIP 200 OK. Suite à l'étape E218, une session de communication S2 est établie entre le terminal 12 et le réseau de communication 10.

Lors d'une étape E2181, le réseau de communication 10 obtient du serveur de stockage 16 les données de dessin générées lors de la session de communication S1.

Lors d'une étape E219, le réseau de communication 10 envoie au terminal 12 les données de dessin générées lors de la session de communication S1. Les données de dessin sont envoyées au terminal 12 selon le protocole MSRP. Au cours de l'étape E219, le terminal 12 reçoit les données de dessin envoyées par le réseau de communication 10.

Les données de dessin sont envoyées au terminal 12 telles que le terminal 15 les avait envoyées au cours de la session de communication S1. Par exemple, les données de dessin sont envoyées dans le même ordre chronologique que celui dans lequel le terminal 15 les avait générées. Ainsi, l'utilisateur UB peut voir comment le dessin fait par l'utilisateur UA au cours de la session de communication S1 a été élaboré.

Lorsque toutes les données de dessin générées au cours de la session de communication S1 ont été envoyées au terminal 12, au cours d'une étape E220, le réseau de communication 10 envoie au terminal 12 un message SIP BYE pour mettre fin à la session de communication S2.

Lors d'une étape E221, le terminal 12 acquitte la fin de la session de communication S2 par l'envoi au réseau de communication d'un message SIP 2000K.

Selon un mode particulier de réalisation de l'invention, le terminal 12 comprend dans une mémoire un historique des données de communication échangées entre le terminal 12 et le terminal 15 au cours de précédentes sessions de communication. Un tel historique est restitué sur le terminal 12 à l'utilisateur UB sous la forme d'un fil de conversation rassemblant tous les types de sessions de communication établies précédemment entre le terminal 12 et le terminal 15. Par exemple, le fil de conversation comprend les messages SMS ou MMS, les courriels, le journal d'appels téléphoniques, les dessins créés conjointement au cours d'une session de communication.

Selon ce mode particulier de réalisation de l'invention, au cours d'une étape E217, le terminal 12 ajoute au fil de conversation les données de dessin reçues du réseau de communication 10 au cours de la session de communication S2.

Selon un autre mode particulier de réalisation de l'invention, lors d'une étape E2220, le terminal 12 restitue sur une interface graphique les données de dessins reçues du réseau de communication 10.

Dans ce mode particulier de réalisation de l'invention, l'utilisateur UB complète le dessin représenté par les données de dessin affichées par le terminal 12 en dessinant sur l'interface de son terminal 12. Lors d'une étape E2221, le terminal 12 génère de nouvelles données de dessin en réponse à l'interaction de l'utilisateur UB sur l'interface de son terminal. Les données de dessin reçues au cours de l'étape E219 sont enregistrées par le terminal 12 dans un format vectoriel. Ainsi, les données de dessin restituées sur le terminal 12 sont facilement modifiables.

La génération de nouvelles données de dessin à partir des données de dessin générées au cours de la session de communication S1 et restituées sur l'interface du terminal 12 provoque l'établissement d'une nouvelle session de communication S3 entre le terminal 12 et le terminal 15. Pour cela, au cours d'une étape E223, le terminal 12 envoie au terminal 15 un message d'invitation à participer à la nouvelle session de communication S3. Le message d'invitation est envoyé sous la forme d'un message SIP INVITE contenant notamment dans le champ « svg id » l'identifiant du dessin initié au cours de la session de communication S1.

Lors d'une étape E224, le terminal 15 envoie en réponse au terminal 12 un message SIP 180 Ringing. Lors d'une étape E225, le terminal 15 étant disponible pour établir une session de communication, le terminal 15 envoie au terminal 12 un message d'acceptation à participer à la session de communication S3 sous la forme d'un message SIP 200 OK.

Suite à la réception par le terminal 12 du message 200 OK envoyé par le terminal 15 au cours de l'étape E225, la session de communication S3 est établie entre le terminal 15 et le terminal 12. Lors d'une étape E227, les données de dessin générées par le terminal 12 au cours de l'étape E2221 sont envoyées au terminal 15 selon le protocole MSRP. Au cours de l'étape E227, le terminal 15 reçoit les données de dessin générées par le terminal 12 au cours de l'étape E2221. Lors d'une étape E228, les données de dessins reçues par le terminal 15 au cours de l'étape E227 sont ajoutées aux données de dessin générées par le terminal 15 au cours de la session de communication S1. Au cours de l'étape E228, les données de dessins générées par le terminal 15 au cours de la session de communication S1 et les données de dessins reçues par le terminal 15 au cours de l'étape E227 sont restituées par le terminal 15 sur l'écran du terminal.

Les terminaux 12 et 15 communiquent ensuite de façon classique au cours de la session de communication S3 en s'échangeant les données de dessin générées par chaque terminal suite à une interaction d'un utilisateur sur l'interface du terminal.

Selon un autre mode particulier de réalisation de l'invention, au cours de l'étape E223, si le terminal 15 n'est pas disponible pour établir une session de communication S3, le réseau de communication 10 en relation avec le serveur de stockage 16 mettent en œuvre le procédé de communication tel que décrit selon les étapes E202 à E219 en remplaçant dans la description de ces étapes le terminal 12 par le terminal 15. Dans ce mode particulier de réalisation de l'invention, le terminal 12 est alors en session de communication asynchrone.

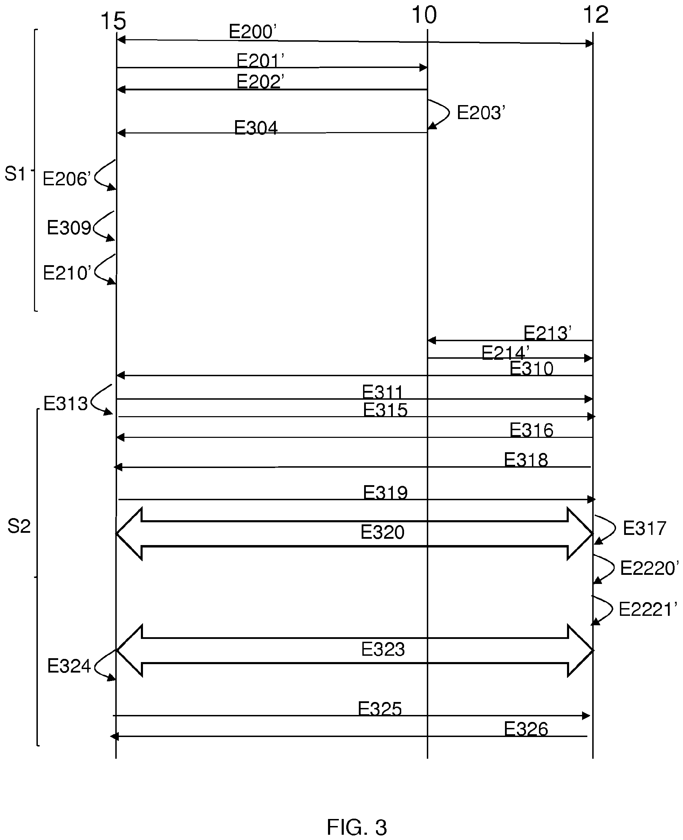

La figure 3 illustre des étapes du procédé de communication et des étapes du procédé de réception selon un autre mode particulier de réalisation de l'invention. Dans ce mode particulier de réalisation de l'invention, le procédé de communication est mis en œuvre par le terminal 15.

Dans ce mode particulier de réalisation de l'invention, lors d'une étape préalable E200', les terminaux 12 et 15 échangent leur capacités de manière similaire à l'étape E200 décrite en relation avec la figure 2.

L'utilisateur du terminal 15 souhaite dessiner avec l'utilisateur du terminal 12 au cours d'une session de communication S1 initiée par le terminal 15. Lors d'une étape E201', le terminal 15 émet à destination du terminal 12 un message d'invitation pour participer à la session de communication S1. Le message d'invitation est envoyé sous la forme d'un message SIP INVITE de manière similaire à l'étape E201 décrite en relation avec la figure 2.

Au cours de l'étape E201', le message INVITE est reçu par le réseau de communication 10. Lors d'une étape E202', le réseau de communication 10 envoie alors au terminal 15 un message 183 Progress selon le protocole SIP indiquant au terminal 15 que le réseau de communication est en train de prolonger son message d'invitation vers le terminal 12.

Lors d'une étape E203', le réseau de communication détecte que le terminal 12 n'est pas disponible pour établir une session de communication de manière similaire à l'étape E203 décrite en relation avec la figure 2.

Le terminal 12 n'étant pas disponible pour établir une session de communication avec le terminal 15, lors d'une étape E304, le réseau de communication 10 envoie au terminal 15 un message SIP 4xxx « Client Failure Response » indiquant au terminal 15 que le terminal 12 n'est pas disponible pour établir une session de communication.

Dans ce mode particulier de réalisation de l'invention, le terminal 15 est alors seul à participer à la session de communication S1.

Selon un autre mode particulier de réalisation de l'invention, lorsque le terminal 15 a invité d'autres terminaux que le terminal 12 à participer à la session de communication S1 et qu'au moins un autre terminal a accepté la session de communication S1, le la session de communication S1 est établie entre le terminal 15 et ledit au moins un autre terminal.

Lors d'une étape E206', l'utilisateur UA dessine sur l'interface de son terminal 15. Au cours de l'étape E206', le terminal 15 génère alors des données de dessin correspondant aux mouvements de l'utilisateur UA sur l'interface du terminal 15.

Lors d'une étape E309, le terminal 15 enregistre les données de dessin générées au cours de l'étape E206'. Les données de dessin sont enregistrées par le terminal 15 dans un format graphique vectoriel, par exemple selon le format de fichier SVG (pour Scalable Vectoriel Graphics) connu de l'homme du métier.

Au cours de l'étape E309, le terminal 15 enregistre les données de dessin en association avec des données d'identification de la session de communication S1. De telles données d'identification comprennent notamment l'identifiant du dessin contenu dans le champ « svg id » du message SIP INVITE envoyé par le terminal 15 au cours de l'étape E201', des informations permettant d'identifier les terminaux invités à participer à la session de communication S1, des informations permettant d'identifier les terminaux qui n'étaient pas disponibles pour participer à la session de communication S1 parmi les terminaux invités à participer à la session de communication S1.

Les données d'identification de la session de communication S1 enregistrées permettent ultérieurement de demander l'établissement d'une nouvelle session de communication entre les terminaux initialement invités à participer à la session de communication S1 à partir des données de dessin générées au cours de la session de communication S1.

Lors d'une étape E210', l'utilisateur UA quitte l'application de communication de dessin utilisée par le terminal 15 pour dessiner lors d'une session de communication.

Après l'étape E210', la session de communication S1 est terminée.

Lors d'une étape E213', le terminal 12 modifie son état en un état disponible pour établir une session de communication.

Par exemple, si le terminal 12 n'était pas enregistré dans le cœur du réseau de communication 10, le terminal 12 envoie au réseau de communication 10 un message d'enregistrement au cours de l'étape E213'. Le message d'enregistrement est envoyé sous la forme d'un message REGISTER selon le protocole SIP et permet au cœur du réseau de communication 10 d'enregistrer le terminal 12.

Lors d'une étape E214', le réseau de communication 10 envoie un message 200 OK au terminal 12 pour acquitter l'enregistrement du terminal 12 dans le cœur du réseau de communication 10. Lors d'une étape E310, le terminal 12 émet à destination du terminal 15 un message SIP OPTIONS pour interroger le terminal 15 sur ses capacités RCS. Au cours de l'étape E310, le terminal 15 reçoit le message SIP OPTIONS envoyé par le terminal 12. Lors d'une étape E311, le terminal 15 répond alors au terminal 12 par l'envoi d'un message SIP OPTIONS contenant les capacités RCS du terminal 15.

En variante, lors de l'étape E310, le terminal 12 émet à destination du terminal 15 un message SIP MESSAGE publiant alors sa présence pour pouvoir recevoir des sessions de communication auprès de tous ses contacts et notamment auprès du terminal 15. Dans cette variante, lors de l'étape E311, le terminal 15 répond au terminal 12 par l'envoi d'un message SIP 200 OK.

Dans une autre variante, lors de l'étape E310, le terminal 12 publie sa présence pour pouvoir recevoir des sessions de communication auprès du réseau de communication 10 en émettant vers le réseau de communication 10 un message SIP NOTIFY. Au cours de l'étape E310, le réseau de communication 10 prolonge le message SIP NOTIFY à tous les terminaux ayant souscrit à l'événement de publication de présence du terminal 12. Par exemple tous les terminaux appartenant à un groupe de contacts du terminal 12 et disposant de la capacité de dessin selon le protocole RCS ont souscrit à un tel événement.

Au cours de l'étape E310, le terminal 15 reçoit le message SIP NOTIFY en provenance du réseau de communication 10. Dans cette autre variante, lors de l'étape E311, le terminal 15 répond au terminal 12 par l'envoi d'un message SIP 200 OK.

La réception par le terminal 15 du message SIP OPTIONS ou SIP NOTIFY ou SIP MESSAGE envoyé par le terminal 12 au cours de l'étape E310 permet au terminal 15 de détecter lors d'une étape E313 la modification de l'état du terminal 12 en un état disponible pour établir une session de communication.

La détection par le terminal 15 de la modification de l'état du terminal 12 en un état disponible pour participer à une session de communication provoque l'envoi par le terminal 15 au terminal 12 d'un message d'invitation pour participer à une session de communication S2, au cours d'une étape E315. Le message d'invitation est envoyé sous la forme d'un message SIP INVITE et comporte notamment dans un champ « svg id » l'identifiant du dessin initié au cours de la session de communication S1 et un identifiant du terminal 15 indiquant au terminal 12 que la session de communication S1 a été initiée par le terminal 15.

Lors d'une étape E316, le terminal 12 envoie au terminal 15 un message SIP 180 Ringing indiquant au terminal 15 que le terminal 12 est en train de notifier à l'utilisateur UB la demande d'établissement d'une session de communication S2 envoyée par le terminal 15.

Le terminal 12 étant dans un état disponible pour établir une session de communication, lors d'une étape E318, le terminal 12 accepte automatiquement la demande d'établissement d'une session de communication envoyée par le terminal 15. Pour cela, le terminal 12 envoie au terminal 15 un message d'acceptation pour participer à la session de communication S2 demandée, au cours de l'étape E318, sous la forme d'un message SIP 200 OK. Au cours de l'étape E318, le terminal 15 reçoit le message SIP 2000K envoyé par le terminal 12.

Lors d'une étape E319, le terminal 15 répond au terminal 12 par l'envoi d'un message d'acquittement SIP ACK.

Suite à l'étape E319, une session de communication S2 est établie entre le terminal 12 et le terminal 15.

Lors d'une étape E320, le terminal 15 envoie au terminal 12 les données de dessin générées lors de la session de communication S1 et enregistrées par le terminal 15. Les données de dessin sont envoyées au terminal 12 selon le protocole MSRP. Au cours de l'étape E320, le terminal 12 reçoit les données de dessin envoyées par le terminal 15, via le réseau de communication 10.

Les données de dessin sont envoyées au terminal 12 telles que le terminal 15 les avait générées au cours de la session de communication S1. Par exemple, les données de dessin sont envoyées dans le même ordre chronologique que celui dans lequel le terminal 15 les avait générées. Ainsi, l'utilisateur UB peut voir comment le dessin fait par l'utilisateur UA au cours de la session de communication S1 a été élaboré.

Selon un mode particulier de réalisation de l'invention, lors d'une étape E317, le terminal 12 met en œuvre une étape d'ajout à un fil de conversation des données de dessin reçues au cours de l'étape E320, identique à l'étape d'ajout E217 décrite en relation avec la figure 2.

Selon un autre mode particulier de réalisation de l'invention, lors d'une étape E2220', le terminal 12 restitue sur une interface graphique les données de dessins reçues lors de l'étape E320.

Dans ce mode particulier de réalisation de l'invention, l'utilisateur UB complète le dessin représenté par les données de dessin affichées par le terminal 12 en dessinant sur l'interface de son terminal 12. Lors d'une étape E2221', le terminal 12 génère de nouvelles données de dessin en réponse à l'interaction de l'utilisateur UB sur l'interface de son terminal.

Lors d'une étape E323, les données de dessin générées par le terminal 12 au cours de l'étape E2221' sont envoyées au terminal 15 selon le protocole MSRP. Au cours de la étape E323, le terminal 15 reçoit les données de dessin générées par le terminal 12 au cours de l'étape E2221'.

Lors d'une étape E324, les données de dessins reçues par le terminal 15 au cours de l'étape E323 sont ajoutées aux données de dessin générées par le terminal 15 au cours de la session de communication S1 et enregistrées par le terminal 15 lors de l'étape E309. Au cours de l'étape E324, les données de dessins générées par le terminal 15 au cours de la session de communication S1 et les données de dessins reçues par le terminal 15 au cours de l'étape E323 sont restituées par le terminal 15 sur l'écran du terminal.

Les terminaux 12 et 15 communiquent ensuite de façon classique au cours de la session de communication S2 en s'échangeant des données de dessin générées par chaque terminal suite à une interaction d'un utilisateur sur l'interface du terminal.

Lors d'une étape E325, lorsqu'aucune donnée de dessin n'est échangée pendant une durée prédéterminée, par exemple 3 minutes, le terminal 15 ou le terminal 12 envoie à l'autre terminal, le terminal 12 ou le terminal 15, un message SIP BYE pour mettre fin à la session de communication S2 établie entre le terminal 15 et le terminal 12. Lors d'une étape E326, le terminal 12 ou le terminal 15 acquitte la fin de la session de communication S2 par l'envoi au terminal 15 ou au terminal 12 d'un message SIP ACK.

Le procédé de communication et le procédé de réception de premières données de dessin ont été décrits selon un mode particulier de réalisation de l'invention dans lequel un ou deux terminaux sont impliqués dans les sessions de communication de dessin S1, S2 ou S3.

L'invention peut être facilement mise en œuvre dans le cas où les sessions de communications impliquent plus de deux terminaux. Par exemple, la session de communication S1 peut être établie entre plusieurs terminaux.

Dans le mode de réalisation décrit en relation avec la figure 2, les premières données de dessin générées au cours de la session de communication S1 par chaque terminal impliqué dans la session de communication S1 sont alors sauvegardées par le serveur de stockage 16 au cours de l'étape E209 et transmises au terminal 15 au cours de l'étape E219.

Dans le mode de réalisation décrit en relation avec la figure 3, chaque terminal impliqué dans la session de communication S1 sauvegarde les données de dessin qu'il a générées au cours de la session de communication S1. Lorsque le terminal 12 redevient disponible, chaque terminal qui a été impliqué dans la session de communication S1 met en œuvre les étapes du procédé de communication décrites en relation avec la figure 3, de manière identique au terminal 15.

La figure 4 illustre un dispositif permettant de mettre en œuvre le procédé de communication selon un mode particulier de réalisation de l'invention.

Le dispositif 40 comprend un module de stockage 42, par exemple une mémoire (MEM), une unité de traitement 43, équipée par exemple d'un microprocesseur (PROC), et pilotée par le programme d'ordinateur (PG) 41 mettant en œuvre le procédé de communication tel que décrit en relation avec la figure 2 ou la figure 3. A l'initialisation, les instructions de code du programme d'ordinateur 41 sont par exemple chargées en mémoire (MEM) avant d'être exécutées par le processeur (PROC) de l'unité de traitement 43. Le processeur de l'unité de traitement 43 met en œuvre les étapes du procédé de communication établie entre au moins un premier terminal et un deuxième terminal, une première session de communication ayant été préalablement établie à l'initiative du premier terminal, par l'envoi par le premier terminal au deuxième terminal d'un message d'invitation pour participer à ladite première session de communication. Au cours de la première session de communication, des premières données de dessin ont été générées par au moins le premier terminal, lesdites premières données de dessin étant destinées à être transmises au deuxième terminal. Selon les instructions du programme d'ordinateur 41, lorsque le deuxième terminal n'est pas disponible pour participer à la première session de communication, le processeur de l'unité de traitement 43 met notamment en œuvre:
- une étape d'enregistrement desdites premières données de dessin dans la mémoire (MEM),
- après la fin de ladite première session de communication, une étape de détection d'un état disponible du deuxième terminal pour participer à une session de communication, déclenchant l'envoi par le dispositif de communication, au deuxième terminal d'un message d'invitation pour participer à une deuxième session de communication,
- une étape de réception par le dispositif de communication d'un message d'acceptation pour participer à ladite deuxième session de communication en provenance du deuxième terminal, permettant l'établissement de la deuxième session de communication entre le deuxième terminal et le dispositif de communication,
- et au cours de la deuxième session de communication, une étape d'envoi au deuxième terminal desdites premières données de dessin enregistrées.

Le module de stockage 42 permet de stocker sur le dispositif 40 les premières données de dessin générées au cours de la première session de communication.

Le dispositif 40 comporte aussi des moyens de communication 46. Les moyens de communication sont par exemple mis en œuvre par un module de communication (COM). Le module de communication permet notamment au dispositif 40 d'établir des communications via le réseau de communication 10 de la figure 1 avec le terminal 12 de la figure 1. Le module de communication (COM) permet d'envoyer d'un message d'invitation pour participer à une session de communication, de recevoir un message d'acceptation pour participer à la session de communication, et d'envoyer des premières données de dessin enregistrées.

Selon un mode particulier de réalisation de l'invention, le dispositif 40 comprend également des moyens d'interaction utilisateur 44 (I/O) permettant à l'utilisateur d'interagir avec le dispositif 40, par exemple pour élaborer un dessin sur une interface du dispositif 40. Les moyens d'interaction utilisateur 44 sont par exemple mis en œuvre au moyen d'une interface utilisateur. Cette interface utilisateur peut correspondre à un clavier, une souris, ou un écran tactile.

Selon un mode particulier de réalisation de l'invention, le dispositif 40 comprend des moyens de restitution 45 permettant notamment de restituer les données de dessin générées par le dispositif 40 suite à une interaction utilisateur sur une interface du dispositif 40 ou des données de dessin reçues en provenance par exemple du terminal 12 de la figure 1. Les moyens de restitution sont par exemple mis œuvre par un module d'affichage (AFF), tel qu'un écran.

Selon un mode particulier de réalisation de l'invention, le dispositif 40 est compris dans un terminal, tel que par exemple le terminal 15 de la figure 1. Plus généralement, le dispositif 40 est compris dans un terminal tel que par exemple un ordinateur personnel, fixe ou mobile, un téléphone mobile, une tablette, une télévision connectée, un smartphone, etc...

Selon un autre mode particulier de réalisation de l'invention, le dispositif 40 est compris dans un serveur, par exemple le serveur de stockage 16 de la figure 1.

La figure 5 illustre un dispositif permettant de mettre en œuvre le procédé de réception de premières données de dessin selon un mode particulier de réalisation de l'invention.

Le dispositif 50 comprend un module de stockage 52, par exemple une mémoire (MEM), une unité de traitement 53, équipée par exemple d'un microprocesseur (PROC), et pilotée par le programme d'ordinateur (PG) 51 mettant en œuvre le procédé de réception de premières données de dessin tel que décrit en relation avec la figure 2 ou la figure 3. A l'initialisation, les instructions de code du programme d'ordinateur 51 sont par exemple chargées en mémoire (MEM) avant d'être exécutées par le processeur (PROC) de l'unité de traitement 53. Le processeur de l'unité de traitement 53 met en œuvre les étapes du procédé de réception de premières données de dessin générées au cours d'une première session de communication établie à l'initiative d'un premier terminal, par l'envoi par le premier terminal au dispositif 50 d'un message d'invitation pour participer à ladite première session de communication. Au cours de la première session de communication, les premières données de dessin ont été générées par au moins le premier terminal. Selon les instructions du programme d'ordinateur 41, lorsque le dispositif 50 n'est pas disponible pour participer à la première session de communication, et après la fin de ladite première session de communication, le processeur de l'unité de traitement 53 met en œuvre:
- une étape de modification de l'état du dispositif 50 en un état disponible pour participer à une session de communication,
- une étape de réception d'un message d'invitation pour participer à une deuxième session de communication en provenance d'un dispositif de communication,
- une étape d'envoi au dispositif de communication d'un message d'acceptation pour participer à ladite deuxième session de communication, permettant l'établissement de ladite deuxième session de communication entre le dispositif 50 et le dispositif de communication,
- et au cours de la deuxième session de communication, une étape de réception desdites premières données de dessin, lesdites premières données de dessin ayant été préalablement enregistrées par le dispositif de communication au cours de la première session de communication.

Le dispositif 50 comporte aussi des moyens de communication 56. Les moyens de communication sont par exemple mis en œuvre par un module de communication (COM). Le module de communication (COM) permet notamment au dispositif 50 d'établir des communications via le réseau de communication 10 de la figure 1 avec le terminal 15 de la figure 1. Le module de communication (COM) permet de recevoir un message d'invitation pour participer à une session de communication, d'envoyer un message d'acceptation pour participer à la session de communication et de recevoir des premières données de dessin.

Selon un mode particulier de réalisation de l'invention, le module de communication (COM) permet d'envoyer un message d'invitation pour participer à une nouvelle session de communication.

Le module de stockage 52 permet d'enregistrer les premières données de dessin reçues et des données d'identification d'une session de communication.

Selon un mode particulier de réalisation de l'invention, le module de stockage 52 permet de stocker sur le dispositif 50 un historique des données de communication échangées entre au moins le premier terminal et le deuxième terminal au cours de précédentes sessions de communication. Selon un mode particulier de réalisation de l'invention, le dispositif 50 comprend également des moyens d'interaction utilisateur 54 (I/O) permettant à l'utilisateur d'interagir avec le dispositif 50, par exemple pour élaborer un dessin sur une interface du dispositif 50. Les moyens d'interaction utilisateur 54 sont par exemple mis en œuvre au moyen d'une interface utilisateur. Cette interface utilisateur peut correspondre à un clavier, une souris, ou un écran tactile.

Selon un mode particulier de réalisation de l'invention, le dispositif 50 comprend des moyens de restitution 55 permettant notamment de restituer les données de dessin générées par le dispositif 50 suite à une interaction utilisateur sur une interface du dispositif 50 ou les données de dessin reçues en provenance du terminal 15 ou du serveur de stockage 16 de la figure 1. Les moyens de restitution sont par exemple mis œuvre par un module d'affichage (AFF), tel qu'un écran.

Selon un mode particulier de réalisation de l'invention, le dispositif 50 est compris dans un terminal, tel que par exemple le terminal 12 de la figure 1. Plus généralement, le dispositif 50 est compris dans un terminal tel que par exemple un ordinateur personnel, fixe ou mobile, un téléphone mobile, une tablette, une télévision connectée, un smartphone, etc...

## Revendications

1. Procédé de communication entre au moins un premier terminal (15) et un deuxième terminal (12),
- une première session de communication (S1) ayant été préalablement établie entre le premier terminal (15) et un réseau de communication (10), à l'initiative du premier terminal, après l'envoi (E201) par le premier terminal au deuxième terminal d'un message d'invitation pour participer à ladite première session de communication,
- au cours de la première session de communication, des premières données de dessin ayant été générées (E206) par au moins le premier terminal, lesdites premières données de dessin étant destinées à être transmises au deuxième terminal,
le procédé est **caractérisé en ce qu'**il comprend, lorsque le deuxième terminal n'est pas disponible pour participer à la première session de communication :
- une étape d'enregistrement (E209) desdites premières données de dessin dans un dispositif de communication (16),
- après la fin de ladite première session de communication, une étape de détection (E213) d'un état disponible du deuxième terminal pour participer à une session de communication, déclenchant l'envoi (E215) par le dispositif de communication, au deuxième terminal d'un message d'invitation pour participer à une deuxième session de communication,
- une étape de réception (E216) par le dispositif de communication d'un message d'acceptation pour participer à ladite deuxième session de communication en provenance du deuxième terminal, permettant l'établissement de la deuxième session de communication (S2) entre le deuxième terminal et le dispositif de communication,
- au cours de la deuxième session de communication, une étape d'envoi (E219) au deuxième terminal desdites premières données de dessin enregistrées.

2. Procédé de communication selon la revendication 1, comprenant une étape préalable d'échanges entre le premier terminal et le deuxième terminal d'une information de capacité indiquant si le premier terminal ou le deuxième terminal supporte une capacité de dessin.

3. Procédé de communication selon l'une quelconque des revendications 1 ou 2, comprenant, au cours d'une session de communication, une étape de réception en provenance du deuxième terminal de deuxièmes données de dessin générées par le deuxième terminal, en réponse à une réception par le deuxième terminal desdites premières données de dessin envoyées, lesdites deuxièmes données de dessin étant destinées à être ajoutées aux premières données de dessin pour être restituées sur le premier terminal au cours de la session de communication si le premier terminal est disponible pour participer à ladite session de communication ou au cours d'une session de communication ultérieure sinon.

4. Procédé de réception, mis en œuvre par un deuxième terminal, de premières données de dessin, les premières données de dessin ayant été générées par au moins un premier terminal au cours d'une première session de communication établie entre ledit premier terminal et un réseau de communication,
le procédé est **caractérisé en ce qu'**il comprend, suite à une non disponibilité du deuxième terminal pour répondre à un message d'invitation à participer à ladite première session de communication et après la fin de ladite première session de communication :
- une étape de modification de l'état du deuxième terminal en un état disponible pour participer à une session de communication,
- une étape de réception par le deuxième terminal d'un message d'invitation pour participer à une deuxième session de communication en provenance d'un dispositif de communication,
- une étape d'envoi par le deuxième terminal au dispositif de communication d'un message d'acceptation pour participer à ladite deuxième session de communication, permettant l'établissement de ladite deuxième session de communication entre le deuxième terminal et le dispositif de communication,
- au cours de la deuxième session de communication, une étape de réception par le deuxième terminal desdites premières données de dessin, lesdites premières données de dessin ayant été préalablement enregistrées par le dispositif de communication au cours de la première session de communication.

5. Procédé de réception de données de dessin selon la revendication 4, dans lequel les premières données de dessin sont ajoutées dans le deuxième terminal à un fil de conversation entre au moins l'utilisateur du premier terminal et l'utilisateur du deuxième terminal, ledit fil de conversation comprenant un historique des données de communication échangées entre au moins le premier terminal et le deuxième terminal au cours de précédentes sessions de communication.

6. Procédé de réception de données de dessin selon l'une quelconque des revendications 4 ou 5, comprenant :
- une étape de génération de deuxièmes données de dessin par le deuxième terminal, en réponse à une restitution sur le deuxième terminal desdites premières données de dessin reçues,
- une étape d'envoi par le deuxième terminal au dispositif de communication, desdites deuxièmes données de dessin, lesdites deuxièmes données de dessin étant destinées à au moins le premier terminal.

7. Procédé de réception de données de dessin selon la revendication 6, dans lequel lorsque le dispositif de communication est un serveur de stockage d'un réseau de communication, la génération par le deuxième terminal desdites deuxièmes données de dessin provoque l'envoi au premier terminal d'un message d'invitation à une troisième session de communication.

8. Dispositif de communication entre au moins un premier terminal et un deuxième terminal,
- une première session de communication ayant été préalablement établie entre le premier terminal et un réseau de communication, à l'initiative du premier terminal, après l'envoi par le premier terminal au deuxième terminal d'un message d'invitation pour participer à ladite première session de communication,
- au cours de la première session de communication, des premières données de dessin ayant été générées par au moins le premier terminal, lesdites premières données de dessin étant destinées à être transmises au deuxième terminal,
le dispositif est **caractérisé en ce qu'**il comprend les moyens suivants activés lorsque le deuxième terminal n'est pas disponible pour participer à la première session de communication:
- des moyens d'enregistrement desdites premières données de dessin,
- des moyens de détection d'un état disponible du deuxième terminal pour participer à une session de communication, déclenchant des moyens d'envoi au deuxième terminal d'un message d'invitation pour participer à une deuxième session de communication, lesdits moyens de détection étant activés après la fin de ladite première session de communication,
- des moyens de réception d'un message d'acceptation pour participer à ladite deuxième session de communication en provenance du deuxième terminal, permettant l'établissement de la deuxième session de communication entre le deuxième terminal et ledit dispositif de communication,
- des moyens d'envoi au deuxième terminal desdites premières données de dessin enregistrées, lesdits moyens d'envoi étant activés au cours de la deuxième session de communication.

9. Dispositif de réception de premières données de dessin, le dispositif étant compris dans un deuxième terminal et les premières données de dessin ayant été générées par au moins un premier terminal au cours d'une première session de communication établie entre ledit premier terminal et un réseau de communication, , le dispositif est **caractérisé en ce qu'**il comprend, les moyens suivants mis en œuvre suite à une non disponibilité du deuxième terminal pour répondre à un message d'invitation à participer à ladite première session de communication, et après la fin de ladite première session de communication :
- des moyens de modification de l'état du deuxième terminal en un état disponible pour participer à une session de communication,
- des moyens de réception d'un message d'invitation pour participer à une deuxième session de communication en provenance d'un dispositif de communication,
- des moyens d'envoi au dispositif de communication d'un message d'acceptation pour participer à ladite deuxième session de communication, permettant l'établissement de ladite deuxième session de communication entre ledit dispositif de réception et le dispositif de communication,
- des moyens de réception desdites premières données de dessin, lesdites premières données de dessin ayant été préalablement enregistrées par le dispositif de communication au cours de la première session de communication, lesdits moyens de réception étant activés au cours de la deuxième session de communication.

10. Terminal comprenant un dispositif selon la revendication 8.

11. Terminal comprenant un dispositif selon la revendication 9.

12. Programme d'ordinateur comportant des instructions de code de programme pour l'exécution des étapes du procédé de communication selon l'une quelconque des revendications 1 à 3, lorsque le programme est exécuté par un processeur.

13. Programme d'ordinateur comportant des instructions de code de programme pour l'exécution des étapes du procédé de réception selon l'une quelconque des revendications 4 à 7, lorsque le programme est exécuté par un processeur.

## Patentansprüche

1. Kommunikationsverfahren zwischen mindestens einem ersten Endgerät (15) und einem zweiten Endgerät (12),
- wobei eine erste Kommunikationssitzung (S1) zwischen dem ersten Endgerät (15) und einem Kommunikationsnetz (10) vorab auf Initiative des ersten Endgeräts nach dem Senden (E201) einer Einladungsnachricht zur Teilnahme an der ersten Kommunikationssitzung vom ersten Endgerät an das zweite Endgerät aufgebaut wurde,
- während der ersten Kommunikationssitzung erste Zeichnungsdaten von mindestens dem ersten Endgerät generiert wurden (E206), wobei die ersten Zeichnungsdaten dazu bestimmt sind, an das zweite Endgerät übertragen zu werden,
das Verfahren ist **dadurch gekennzeichnet, dass** es, wenn das zweite Endgerät nicht zur Verfügung steht, um an der ersten Kommunikationssitzung teilzunehmen, enthält:
- einen Schritt des Speicherns (E209) der ersten Zeichnungsdaten in einer Kommunikationsvorrichtung (16),
- nach dem Ende der ersten Kommunikationssitzung einen Schritt der Erfassung (E213) eines verfügbaren Zustands des zweiten Endgeräts, um an einer Kommunikationssitzung teilzunehmen, der das Senden (E215) einer Einladungsnachricht zur Teilnahme an einer zweiten Kommunikationssitzung von der Kommunikationsvorrichtung zum zweiten Endgerät auslöst,
- einen Schritt des Empfangs (E216) durch die Kommunikationsvorrichtung einer vom zweiten Endgerät kommenden Akzeptierungsnachricht, an der zweiten Kommunikationssitzung teilzunehmen, die den Aufbau der zweiten Kommunikationssitzung (S2) zwischen dem zweiten Endgerät und der Kommunikationsvorrichtung ermöglicht,
- während der zweiten Kommunikationssitzung einen Schritt des Sendens (E219) der ersten gespeicherten Zeichnungsdaten an das zweite Endgerät.

2. Kommunikationsverfahren nach Anspruch 1, das einen vorhergehenden Schritt von Austauschvorgängen zwischen dem ersten Endgerät und dem zweiten Endgerät einer Fähigkeitsinformation enthält, die anzeigt, ob das erste Endgerät oder das zweite Endgerät eine Zeichnungsfähigkeit unterstützt.

3. Kommunikationsverfahren nach einem der Ansprüche 1 oder 2, das während einer Kommunikationssitzung einen Schritt des Empfangs von zweiten Zeichnungsdaten ausgehend vom zweiten Endgerät enthält, die vom zweiten Endgerät generiert werden, als Antwort auf einen Empfang der ersten gesendeten Zeichnungsdaten durch das zweite Endgerät, wobei die zweiten Zeichnungsdaten dazu bestimmt sind, zu den ersten Zeichnungsdaten hinzugefügt zu werden, um auf dem ersten Endgerät während der Kommunikationssitzung, wenn das erste Endgerät zur Verfügung steht, um an der Kommunikationssitzung teilzunehmen, oder sonst während einer späteren Kommunikationssitzung wiedergegeben zu werden.

4. Empfangsverfahren, durchgeführt von einem zweiten Endgerät, von ersten Zeichnungsdaten, wobei die ersten Zeichnungsdaten während einer zwischen dem ersten Endgerät und einem Kommunikationsnetz aufgebauten ersten Kommunikationssitzung von mindestens einem ersten Endgerät generiert wurden,
das Verfahren ist **dadurch gekennzeichnet, dass** es nach einer Nichtverfügbarkeit des zweiten Endgeräts, auf eine Einladungsnachricht zur Teilnahme an der ersten Kommunikationssitzung zu antworten, und nach dem Ende der ersten Kommunikationssitzung enthält:
- einen Schritt der Änderung des Zustands des zweiten Endgeräts in einen verfügbaren Zustand, um an einer Kommunikationssitzung teilzunehmen,
- einen Schritt des Empfangs einer von einer Kommunikationsvorrichtung kommenden Einladungsnachricht, an einer zweiten Kommunikationssitzung teilzunehmen, durch das zweite Endgerät,
- einen Schritt des Sendens einer Akzeptierungsnachricht der Teilnahme an der zweiten Kommunikationssitzung, die den Aufbau der zweiten Kommunikationssitzung zwischen dem zweiten Endgerät und der Kommunikationsvorrichtung ermöglicht, vom zweiten Endgerät an die Kommunikationsvorrichtung,
- während der zweiten Kommunikationssitzung einen Schritt des Empfangs der ersten Zeichnungsdaten durch das zweite Endgerät, wobei die ersten Zeichnungsdaten vorab während der ersten Kommunikationssitzung von der Kommunikationsvorrichtung gespeichert wurden.

5. Empfangsverfahren von Zeichnungsdaten nach Anspruch 4, wobei die ersten Zeichnungsdaten im zweiten Endgerät einem Thread zwischen mindestens dem Benutzer des ersten Endgeräts und dem Benutzer des zweiten Endgeräts hinzugefügt werden, wobei der Thread einen Verlauf der zwischen mindestens dem ersten Endgerät und dem zweiten Endgerät während vorhergehender Kommunikationssitzungen ausgetauschten Kommunikationsdaten enthält.

6. Empfangsverfahren von Zeichnungsdaten nach einem der Ansprüche 4 oder 5, das enthält:
- einen Schritt der Generierung zweiter Zeichnungsdaten durch das zweite Endgerät als Antwort auf eine Wiedergabe der empfangenen ersten Zeichnungsdaten auf dem zweiten Endgerät,
- einen Schritt des Sendens der zweiten Zeichnungsdaten vom zweiten Endgerät an die Kommunikationsvorrichtung, wobei die zweiten Zeichnungsdaten für mindestens das erste Endgerät bestimmt sind.

7. Empfangsverfahren von Zeichnungsdaten nach Anspruch 6, wobei, wenn die Kommunikationsvorrichtung ein Speicherserver eines Kommunikationsnetzes ist, die Generierung der zweiten Zeichnungsdaten durch das zweite Endgerät das Senden einer Einladungsnachricht zu einer dritten Kommunikationssitzung an das erste Endgerät bewirkt.

8. Kommunikationsvorrichtung zwischen mindestens einem ersten Endgerät und einem zweiten Endgerät,
- wobei eine erste Kommunikationssitzung zwischen dem ersten Endgerät und einem Kommunikationsnetz vorab auf Initiative des ersten Endgeräts nach dem Senden einer Einladungsnachricht zur Teilnahme an der ersten Kommunikationssitzung vom ersten Endgerät an das zweite Endgerät aufgebaut wurde,
- während der ersten Kommunikationssitzung, wobei erste Zeichnungsdaten von mindestens dem ersten Endgerät generiert wurden, die ersten Zeichnungsdaten dazu bestimmt sind, an das zweite Endgerät übertragen zu werden,
die Vorrichtung ist **dadurch gekennzeichnet, dass** sie die folgenden Einrichtungen enthält, die aktiviert werden, wenn das zweite Endgerät nicht zur Verfügung steht, um an der ersten Kommunikationssitzung teilzunehmen:
- Speichereinrichtungen der ersten Zeichnungsdaten,
- Erfassungseinrichtungen eines verfügbaren Zustands des zweiten Endgeräts, um an einer Kommunikationssitzung teilzunehmen, der Sendeeinrichtungen einer Einladungsnachricht an das zweite Endgerät auslöst, um an einer zweiten Kommunikationssitzung teilzunehmen, wobei die Erfassungseinrichtungen nach dem Ende der ersten Kommunikationssitzung aktiviert werden,
- Empfangseinrichtungen einer vom zweiten Endgerät kommenden Akzeptierungsnachricht, an der zweiten Kommunikationssitzung teilzunehmen, die den Aufbau der zweiten Kommunikationssitzung zwischen dem zweiten Endgerät und der Kommunikationsvorrichtung ermöglicht,
- Sendeeinrichtungen der gespeicherten ersten Zeichnungsdaten an das zweite Endgerät, wobei die Sendeeinrichtungen während der zweiten Kommunikationssitzung aktiviert werden.

9. Empfangsvorrichtung erster Zeichnungsdaten, wobei die Vorrichtung in einem zweiten Endgerät enthalten ist und die ersten Zeichnungsdaten von mindestens einem ersten Endgerät während einer zwischen dem ersten Endgerät und einem Kommunikationsnetz aufgebauten ersten Kommunikationssitzung generiert wurden, die Vorrichtung ist **dadurch gekennzeichnet, dass** sie die folgenden Einrichtungen enthält, die nach einer Nichtverfügbarkeit des zweiten Endgeräts, auf eine Einladungsnachricht zur Teilnahme an der ersten Kommunikationssitzung zu antworten, und nach dem Ende der ersten Kommunikationssitzung angewendet werden:
- Änderungseinrichtungen des Zustands des zweiten Endgeräts in einen verfügbaren Zustand zur Teilnahme an einer Kommunikationssitzung,
- Empfangseinrichtungen einer von einer Kommunikationsvorrichtung kommenden Einladungsnachricht zur Teilnahme an einer zweiten Kommunikationssitzung,
- Sendeeinrichtungen einer Akzeptierungsnachricht der Teilnahme an der zweiten Kommunikationssitzung an die Kommunikationsvorrichtung, die den Aufbau der zweiten Kommunikationssitzung zwischen der Empfangsvorrichtung und der Kommunikationsvorrichtung erlaubt,
- Empfangseinrichtungen der ersten Zeichnungsdaten, wobei die ersten Zeichnungsdaten vorab während der ersten Kommunikationssitzung von der Kommunikationsvorrichtung gespeichert wurden, wobei die Empfangseinrichtungen während der zweiten Kommunikationssitzung aktiviert werden.

10. Endgerät, das eine Vorrichtung nach Anspruch 8 enthält.

11. Endgerät, das eine Vorrichtung nach Anspruch 9 enthält.

12. Computerprogramm, das Programmcodeanweisungen zur Ausführung der Schritte des Kommunikationsverfahrens nach einem der Ansprüche 1 bis 3 aufweist, wenn das Programm von einem Prozessor ausgeführt wird.

13. Computerprogramm, das Programmcodeanweisungen zur Ausführung der Schritte des Empfangsverfahrens nach einem der Ansprüche 4 bis 7 aufweist, wenn das Programm von einem Prozessor ausgeführt wird.

## Claims

1. Method for communicating between at least a first terminal (15) and a second terminal (12),
- a first communication session (S1) having previously been established between the first terminal (15) and a communication network (10), on the initiative of the first terminal, after the first terminal's sending (E201) of an invitation message to the second terminal to participate in said first communication session,
- during the first communication session, first drawing data having been generated (E206) by at least the first terminal, said first drawing data being intended for transmission to the second terminal,
the method being **characterized in that** it comprises, when the second terminal is not available to participate in the first communication session,
- a step of recording (E209) said first drawing data in a communication device (16),
- after the end of said first communication session, a step of detecting (E213) an available state of the second terminal for participation in a communication session, triggering the sending (E215) of an invitation message by the communication device to the second terminal to participate in a second communication session,
- a step in which the communication device receives (E216) an acceptance message for participation in said second communication session, sent from the second terminal, allowing the second communication session (S2) to be established between the second terminal and the communication device,
- during the second communication session, a step of sending (E219) said first recorded drawing data to the second terminal.

2. Communication method according to Claim 1, comprising a preliminary step of exchanges of capability information between the first terminal and the second terminal, indicating whether the first terminal or the second terminal supports a drawing capability.

3. Communication method according to either one of Claims 1 and 2, comprising, during a communication session, a step of receiving from the second terminal second drawing data generated by the second terminal, in response to the second terminal's reception of said first drawing data that have been sent, said second drawing data being intended to be added to the first drawing data in order to be rendered on the first terminal during the communication session if the first terminal is available to participate in said communication session, or, if this is not the case, during a subsequent communication session.

4. Method, implemented by a second terminal, for receiving first drawing data, the first drawing data having been generated by at least a first terminal during a first communication session established between said first terminal and a communication network,
the method being **characterized in that** it comprises, following a lack of availability of the second terminal to respond to an invitation message to participate in said first communication session and after the end of said first communication session,
- a step of modifying the state of the second terminal to an available state to participate in a communication session,
- a step in which the second terminal receives an invitation message to participate in a second communication session, sent from a communication device,
- a step in which the second terminal sends to the communication device an acceptance message for participation in said second communication session, allowing said second communication session to be established between the second terminal and the communication device,
- during the second communication session, a step in which the second terminal receives said first drawing data, said first drawing data having previously been recorded by the communication device during the first communication session.

5. Method for receiving drawing data according to Claim 4, wherein the first drawing data are added in the second terminal to a conversation thread between at least the user of the first terminal and the user of the second terminal, said conversation thread comprising a history of the communication data exchanged between at least the first terminal and the second terminal during preceding communication sessions.

6. Method for receiving drawing data according to either one of Claims 4 and 5, comprising:
- a step in which the second terminal generates second drawing data, in response to the rendering of said first received drawing data on the second terminal,
- a step in which the second terminal sends said second drawing data to the communication device, said second drawing data being intended for at least the first terminal.

7. Method for receiving drawing data according to Claim 6, wherein, when the communication device is a storage server of a communications network, the generation of said second drawing data by the second terminal causes an invitation message to a third communication session to be sent to the first terminal.

8. Device for communicating between at least a first terminal and a second terminal,
- a first communication session having previously been established between the first terminal and a communication network, on the initiative of the first terminal, after the first terminal's sending of an invitation message to the second terminal to participate in said first communication session,
- during the first communication session, first drawing data having been generated by at least the first terminal, said first drawing data being intended for transmission to the second terminal,
the device being **characterized in that** it comprises the following means, which are activated when the second terminal is not available to participate in the first communication session:
- means for recording said first drawing data,
- means for detecting an available state of the second terminal for participation in a communication session, triggering means for sending an invitation message to the second terminal to participate in a second communication session, said detection means being activated after the end of said first communication session,
- means for receiving an acceptance message for participation in said second communication session, sent from the second terminal, allowing the second communication session to be established between the second terminal and said communication device,
- means for sending said first recorded drawing data to the second terminal, said sending means being activated during the second communication session.

9. Device for receiving first drawing data, the device being contained in a second terminal and the first drawing data having been generated by at least a first terminal during a first communication session established between said first terminal and a communication network, the device being **characterized in that** it comprises the following means, implemented following a lack of availability of the second terminal to respond to an invitation message to participate in said first communication session and after the end of said first communication session:
- means for modifying the state of the second terminal to an available state for participation in a communication session,
- means for receiving an invitation message to participate in a second communication session, sent from a communication device,
- means for sending to the communication device an acceptance message for participation in said second communication session, allowing said second communication session to be established between said receiving device and the communication device,
- means for receiving said first drawing data, said first drawing data having previously been recorded by the communication device during the first communication session, said receiving means being activated during the second communication session.

10. Terminal comprising a device according to Claim 8.

11. Terminal comprising a device according to Claim 9.

12. Computer program comprising program code instructions for executing the steps of the communication method according to any of Claims 1 to 3 when the program is run by a processor.

13. Computer program comprising program code instructions for executing the steps of the receiving method according to any one of Claims 4 to 7 when the program is run by a processor.
